# EUROPEAN PATENT SPECIFICATION

(11) **EP 1 624 611 B1**
(45) Date of publication and mention of the grant of the patent: **28.02.2007**
(21) Application number: 04292006.6
(22) Date of filing: 06.08.2004
(51) Int. Cl.: H04L 12/18

(54) **Multicast source discovery**
Multicast Quellensuche
Decouverte de source multicast

(43) Date of publication of application: 08.02.2006
(73) Proprietor: ALCATEL, 75008 Paris (FR)
(72) Inventor: Mensch, Patrick Paul Yvonne, 2650 Edegem (BE); De Cnodder, Stefaan Jozef, 2275 Lille (BE)
(74) Representative: Narmon, Gisèle Marie Thérèse

(56) References cited:
- EP-A- 1 318 628
- US-A1- 2004 125 803
- US-B1- 6 614 787
- FENNER W: "RFC 2236 .Internet Group Management Protocol, Version 2" IETF, 30 November 1997 (1997-11-30), XP002230720 INTERNET

## Description

The present invention relates to a relay unit for use in a data communication system operable to transmit multicast traffic, and adapted to receive a membership report (or join message) from a particular station (or host), whereby a membership of a particular multicast group is notified.

The membership report is further relayed within a broadcast domain (or access domain) to a multicast router.

Yet, large scale networks are often partitioned into virtual broadcast domains (or virtual networks) that limit the extent to which a broadcast frame or a multicast frame is broadcast, namely the extent to which the membership report is broadcast as eg disclosed in EP 1 318 628. As an example, Ethernet-based networks can be partitioned into Virtual Local Area Networks (VLAN), as defined in 802.1Q standard from the Institute of Electrical and Electronics Engineers (IEEE).

As a matter of fact, the querier election process is constrained within the scope of a single virtual broadcast domain: within each and every virtual broadcast domain, the querier election process designates one multicast router that is responsible for querying stations, and for broadcasting appropriate multicast contents, see eg RFC 2236.

Flooding the membership reports over all the virtual broadcast domains might result in multiple copies of the same multicast content being received.

It is an object of the present invention to prevent multiple copies of the same multicast content from being so-engendered within a so-partitioned network.

According to the invention, this object is achieved due to the fact that said relay unit is further adapted:
- to query a plurality of multicast routers over a plurality of virtual broadcast domains as to whether said particular multicast group is supported,
- to elect one virtual broadcast domain out of said plurality of virtual broadcast domains, over which one multicast router out of said plurality of multicast routers has notified support of said particular multicast group,
- to report said membership to said one multicast router over said one virtual broadcast domain,
- to transmit a particular multicast content, related to said particular multicast group and originating from said one multicast router, from said one virtual broadcast domain towards said particular station.

A relay unit according to the invention is advantageous in that it is capable of autonomously and automatically discovering and electing one single multicast router within the whole initial broadcast domain, thereby lightening considerably the network loading.

The election process is carried out on a per multicast group or multicast content basis, that is to say the relay unit may elect different multicast routers for different multicast groups, thereby sharing multicast traffic load over multiple multicast routers and multiple virtual networks.

An embodiment of a relay unit according to the invention is characterized in that said relay unit is further adapted to query said plurality of multicast routers by broadcasting a plurality of requests, over respective ones of said plurality of virtual networks, to resolve a particular multicast network address, associated with said particular multicast group, into a virtual broadcast domain identifier.

The virtual broadcast domain identifier is for instance a VLAN IDentity (VID).

This embodiment is advantageous as it entirely relies upon the querier election process. The relay unit lets the querier election process designates, within one single virtual broadcast domain, which multicast router will resolve that multicast group address, and further will broadcast the corresponding multicast content, without the need to be informed of the issue of the querier election process, nor to be involved therein.

This embodiment is further advantageous in that multicast router querying relies upon any available address resolution protocol, thereby allowing easy equipment upgrading towards the invention.

The address resolution protocol shall be amended to support multicast network addresses. For example, legacy Ethernet Address Resolution Protocol (ARP) shall be amended to support class D multicast Internet Protocol (IP) addresses.

Other querying protocols can be though of that achieve a similar object, e.g. by means of a new Internet Gateway Multicast Protocol (IGMP) message.

The relay unit may form part of various equipment types, depending at which protocol layer, and/or how deep in the network, the membership reports are relayed.

The relay unit may form part of an access unit that provides users with an access towards a data communication network, such as a Digital Subscriber Line Access Multiplexer (DSLAM) providing an access towards an access network, and further towards a network service provider or a content provider, or an Ethernet bridge providing an access towards a Local Area Network (LAN) or a Metropolitan Area Network (MAN), etc.

The present invention also relates to a method for relaying multicast traffic within a data communication system, and comprising the step of receiving a membership report from a station, whereby a membership of a multicast group is notified.

A method according to the invention is characterized in that it further comprises the steps of:
- querying a plurality of multicast routers over a plurality of virtual broadcast domains as to whether said multicast group is supported,
- electing one virtual broadcast domain out of said plurality of virtual broadcast domains, over which one multicast router out of said plurality of multicast routers has notified support of said multicast group,
- reporting said membership to said one multicast router over said one virtual broadcast domain,
- transmitting a particular multicast content, related to said particular multicast group and originating from said one multicast router, from said one virtual broadcast domain towards said particular station.

Embodiments of a method according to the invention correspond with the embodiments of a relay unit according to the invention.

It is to be noticed that the term 'comprising', also used in the claims, should not be interpreted as being restricted to the means listed thereafter. Thus, the scope of the expression 'a device comprising means A and B' should not be limited to devices consisting only of components A and B. It means that with respect to the present invention, the relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B, and/or vice-versa. It means that there exists a path between an output of A and an input of B, and/or vice-versa, which may be a path including other devices or means.

The above and other objects and features of the invention will become more apparent and the invention itself will be best understood by referring to the following description of an embodiment taken in conjunction with the accompanying drawings wherein:
- fig. 1 represents a data communication system,

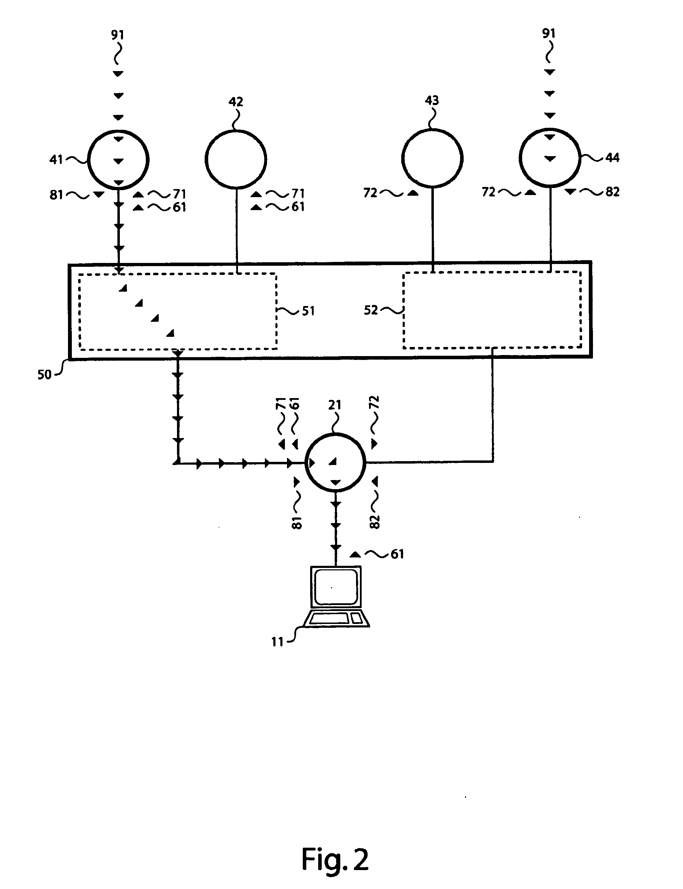

- fig. 2 is a functional representation of that data communication system, and the noticeable data flows conveyed thereupon, with respect to the invention.

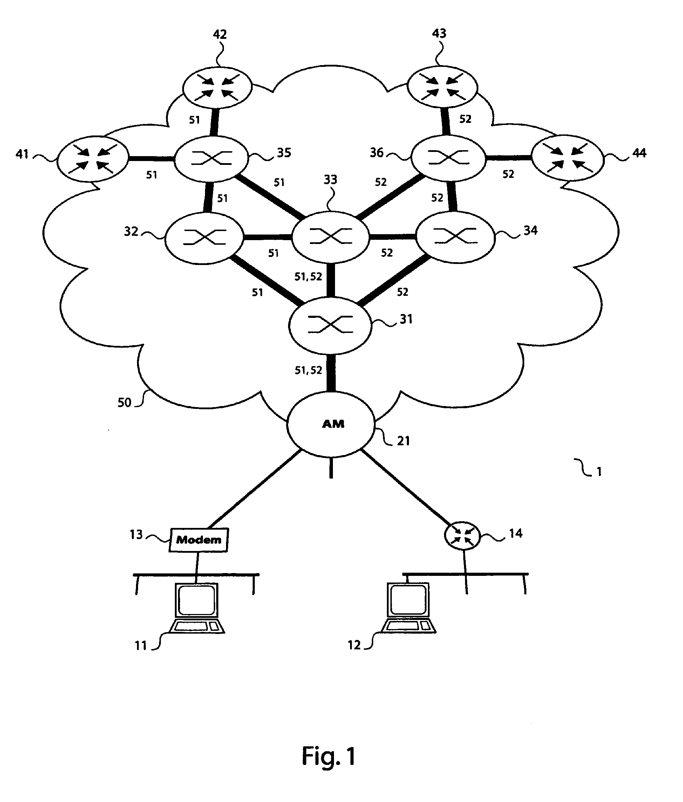

Fig. 1 represents a data communication system 1 that comprises:
- customer premises equipment,
- an access unit 21,
- intermediate bridges 31 to 36,
- multicast routers 41 to 44.

The data communication system 1 may be Ethernet-based and conveys IP payload. This does not preclude the use of another communication technology as known to the person skilled in the art.

Customer premises equipment comprise interalia:
- stations 11 and 12 implementing multicast client capabilities, such as a personal computer, a digital TV/music set, or any other terminal type,
- network equipment, such as a modem 13, a router 14, etc.

Customer premises are coupled to the access unit 21, e.g. via optical fiber, copper wire, the air, etc.

The access unit 21 is for instance a Digital Subscriber Line Access Multiplexer (DSLAM), an Ethernet bridge, an IP router, etc.

The intermediate bridges 31 to 36 and related inter-connection links define an initial broadcast domain 50, the topology of which is depicted in fig. 1.

The initial broadcast domain 50 is split into 2 VLANs 51 and 52, the VIDs of which are VID1 and VID2 respectively. VLAN 51 connects the access unit 21 and the multicast routers 41 and 42 to each other through the bridges 31, 32, 33 and 35. VLAN 52 connects the access unit 21 and the multicast routers 43 and 44 to each other through the bridges 31, 33, 34 and 36.

The data communication system 1 may make use of IGMP version 2 (IGMPv2) to control multicast traffic. Other versions of that protocol, or other multicast protocols, such as Multicast Listener Discovery (MLD), could be used as well.

The access unit 21 may implement IGMP snooping, yet with the provisions that are set forth further in the description.

The access unit 21 is adapted to unconditionally relay general and group-specific IGMP queries from the multicast routers 41 to 44 towards customer premises equipment.

The access unit 21 is further adapted to relay the membership reports, being unsolicited messages or being induced by general and group-specific queries, from customer premises equipment to one or more multicast router, as it is set forth further in the description.

The access unit 21 is further adapted to forward multicast contents towards customer premises equipment, as it is set forth further in the description.

An operation of the preferred embodiment follows.

Initially, the querier election process elects one querier per VLAN. The multicast routers 41 and 44 are assumed to be querier for VLANs 51 and 52 respectively. The multicasts router 42 and 43 are non-querier.

A user operating the station 11 subscribes to a particular multicast content 91 that is assigned a particular multicast group IP address IP@1. The station 11 issues an unsolicited membership report 61, whereby a membership of 91 is notified (or requested). The membership report 61 is relayed by the modem 13 towards the access unit 21.

The access unit 21 next determines over which VLAN is the multicast content 91 supported.

Presently, the access unit 21 sends MultiCast-ARP (MC-ARP) requests 71 and 72 over VLAN 51 and 52 respectively. MC-ARP requests 71 and 72 contain the Ethernet broadcast address FF:FF:FF:FF:FF:FF as destination MAC address, and IP@1 as IP address to resolve. MC-ARP requests 71 and 72 are tagged with VID1 and VID2 respectively, and sends over one (or more) network port that connects to the broadcast domain 50. MC-ARP request 71 is broadcasted through VLAN 51 towards the multicast routers 41 and 42, while MC-ARP request 72 is broadcasted through VLAN 52 towards the multicast routers 43 and 44.

Upon receipt of a MC-ARP request, the querier multicast router checks whether the corresponding multicast content is supported (that is to say, can be delivered). If so, the querier multicast router answers the requests by sending a MC-ARP reply over the corresponding VLAN (i.e., the VLAN over which the MC-ARP request has been received). Presently, the multicast router 41 sends a MC-ARP reply 81 over VLAN 51 to the access unit 21, whereby support of multicast content 91 is notified, and the multicast router 44 sends a MC-ARP reply 82 over VLAN 52 to the access unit 21, whereby support of multicast content 91 is notified.

A multicast router may further encode into the MC-ARP reply the multicast MAC address that maps to a multicast IP address, although this information can be easily and directly derived from the multicast IP address itself.

It is to be noticed that the non-querier multicast routers 42 and 43 remain silent upon receipt of a MC-ARP request.

Upon receipt of MC-ARP replies 81 and 82, the access unit 21 identifies the multicast router 41 as supporting multicast content 91 over VLAN 51, and the multicast router 44 as supporting multicast content 91 over VLAN 52, thereby resolving address IP@1 into both VID1 and VID2 respectively.

The access unit 21 next elects one multicast router out of all the multicast routers that have notified support of multicast content 81, and thus one VLAN, over which the membership report 61 will be reported, and from which the multicast content 91 will be received.

As an example, the access unit 21 elects the multicast router 41, and thus relays the membership report 61 over VLAN 51.

The election algorithm, which the access unit 21 makes use of, is manifold. The access unit 21 may forward membership reports over a preferred VLAN, or may dispatch membership reports over multiple VLANs according to criteria such as network loading, QoS requirements, service level agreement, etc.

Upon receipt of membership report 61, the multicast router 41 starts delivering the multicast content 91 over VLAN 51 to the access unit 21, which in turns broadcast the multicast content 91 towards the station 11.

The access unit 21 may implement IGMP proxy: the access unit 21 queries stations about their group memberships, acting as a multicast router vis-à-vis a station, and answers queries from multicast routers, acting as a single host vis-à-vis a multicast router. Before reporting a membership of a particular multicast group, the access unit 21 elects one VLAN, over which a multicast router has notified support for that multicast group, as it was set forth in the description. The access unit 21 then reports the membership over the elected VLAN.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

## Claims

1. A relay unit (21) for use in a data communication system (1) operable to transmit multicast traffic, and adapted to receive a membership report (61) from a particular station (11), whereby a membership of a particular multicast group is notified,
***characterized in that*** said relay unit is further adapted:
- to query (71, 72) a plurality of multicast routers (41 to 44) over a plurality of virtual broadcast domains (51, 52) as to whether said particular multicast group is supported,
- to elect one virtual broadcast domain (51) out of said plurality of virtual broadcast domains, over which one multicast router (41) out of said plurality of multicast routers has notified (81) support of said particular multicast group,
- to report said membership to said one multicast router over said one virtual broadcast domain,
- to transmit a particular multicast content (91), related to said particular multicast group and originating from said one multicast router, from said one virtual broadcast domain towards said particular station.

2. A relay unit according to claim 1, ***characterized in that*** said relay unit is further adapted to query said plurality of multicast routers by broadcasting a plurality of requests, over respective ones of said plurality of virtual broadcast domains, to resolve a particular multicast network address, associated with said particular multicast group, into a virtual broadcast domain identifier**.**

3. A relay unit according to claim 1, ***characterized in that*** said relay unit is forming part of an access unit of a data communication network.

4. A method for relaying multicast traffic within a data communication system (1), and comprising the step of receiving a membership report (61) from a particular station (11), whereby a membership of a particular multicast group is notified,
***characterized in that*** said method further comprises the steps of:
- querying (71, 72) a plurality of multicast routers (41 to 44) over a plurality of virtual broadcast domains (51, 52) as to whether said particular multicast group is supported,
- electing one virtual broadcast domain (51) out of said plurality of virtual broadcast domains, over which one multicast router (41) out of said plurality of multicast routers has notified support of said particular multicast group,
- reporting said membership to said one multicast router over said one virtual broadcast domain,
- transmitting a particular multicast content (91), related to said particular multicast group and originating from said one multicast router, from said one virtual broadcast domain towards said particular station.

## Patentansprüche

1. Eine Weitergabe-Einheit (21) für die Verwendung in einem Datenkommunikationssystem (1), das Multicast-Verkehr senden kann und angepasst ist, einen Mitgliedschafts-Bericht (61) von einer bestimmten Station (11) zu empfangen, wodurch eine Mitgliedschaft zu einer bestimmten Multicast-Gruppe gemeldet wird,
***dadurch gekennzeichnet, dass*** die Weitergabe-Einheit weiterhin wie folgt angepasst ist:
- Zur Abfrage (71, 72) einer Vielzahl von Multicast-Routern (41 bis 44) über eine Vielzahl von virtuellen Broadcast-Domänen (51, 52), ob die spezielle Multicast-Gruppe unterstützt wird,
- Zur Auswahl einer virtuellen Broadcast-Domäne (51) aus der Vielzahl virtueller Broadcast-Domänen, über die ein Multicast-Router (41) aus der Vielzahl von Multicast-Routern die Unterstützung der speziellen Multicast-Gruppe gemeldet hat (81),
- Zum Melden der Mitgliedschaft an den einen Multicast-Router über die eine virtuelle Broadcast-Domäne,
- Zum Senden eines bestimmten Multicast-Inhaltes (91), der zu der speziellen Multicast-Gruppe gehört und von dem einen Multicast-Router stammt, von der einen virtuellen Broadcast-Domäne zu der speziellen Station.

2. Eine Weitergabe-Einheit gemäß Anspruch 1, ***dadurch gekennzeichnet, dass*** die Weitergabe-Einheit weiterhin angepasst ist, die Vielzahl von Multicast-Routern abzufragen, indem sie eine Vielzahl von Anfragen über entsprechende aus der Vielzahl von virtuellen Broadcast-Domänen sendet, um eine bestimmte Multicast-Netzwerk-Adresse, die mit der speziellen Multicast-Gruppe verbunden ist, in eine virtuelle Broadcast-Domänen-Kennung aufzulösen.

3. Eine Weitergabe-Einheit gemäß Anspruch 1, ***dadurch gekennzeichnet, dass*** die Weitergabe-Einheit zu einer Zugangs-Einheit eines Datenkommunikationsnetzes gehört.

4. Ein Verfahren zur Weitergabe von Multicast-Verkehr in einem Datenkommunikationssystem (1), das den Schritt des Empfangens eines Mitgliedschafts-Berichtes (61) von einer bestimmten Station (11) umfasst, wodurch eine Mitgliedschaft zu einer bestimmten Multicast-Gruppe gemeldet wird,
***dadurch gekennzeichnet, dass*** das Verfahren weiterhin folgende Schritte umfasst:
- Abfrage (71, 72) einer Vielzahl von Multicast-Routern (41 bis 44) über eine Vielzahl von virtuellen Broadcast-Domänen (51, 52), ob die spezielle Multicast-Gruppe unterstützt wird,
- Auswahl einer virtuellen Broadcast-Domäne (51) aus der Vielzahl virtueller Broadcast-Domänen, über die ein Multicast-Router (41) aus der Vielzahl von Multicast-Routern die Unterstützung der speziellen Multicast-Gruppe gemeldet hat,
- Melden der Mitgliedschaft an den einen Multicast-Router über die eine virtuelle Broadcast-Domäne,
- Senden eines bestimmten Multicast-Inhaltes (91), der zu der speziellen Multicast-Gruppe gehört und von dem einen Multicast-Router stammt, von der einen virtuellen Broadcast-Domäne zu der speziellen Station.

## Revendications

1. Unité de relais (21) destinée à être utilisée dans un système de communication de données (1) utilisable pour transmettre un trafic en mode multidiffusion et adaptée pour recevoir d'une station particulière (11) un rapport d'appartenance (61), moyennant quoi une appartenance à un groupe multidiffusé particulier est notifiée,
**caractérisée en ce que** ladite unité de relais est en outre adaptée pour :
- interroger (71, 72) une pluralité de routeurs de multidiffusion (41 à 44) dans une pluralité de domaines virtuels de diffusion générale (51, 52) afin de savoir quel groupe multidiffusé particulier est pris en charge,
- élire un domaine virtuel de diffusion générale (51) parmi ladite pluralité de domaines virtuels de diffusion générale, dans lequel un routeur de multidiffusion (41) parmi ladite pluralité de routeurs de multidiffusion a notifié (81) une prise en charge dudit groupe multidiffusé particulier,
- signaler ladite appartenance au dit un routeur de multidiffusion dans ledit un domaine virtuel de diffusion générale,
- transmettre un contenu multidiffusé particulier (91), relatif au dit groupe multidiffusé particulier et provenant dudit un routeur de multidiffusion, dudit un domaine virtuel de diffusion générale vers ladite station particulière.

2. Unité de relais selon la revendication 1, **caractérisée en ce que** ladite unité de relais est en outre adaptée pour interroger ladite pluralité de routeurs de multidiffusion en diffusant une pluralité de demandes, dans chacun des domaines de ladite pluralité de domaines virtuels de diffusion générale, afin de décomposer une adresse particulière de réseau de multidiffusion, associée au dit groupe multidiffusé particulier, en un identificateur de domaine virtuel de diffusion générale.

3. Unité de relais selon la revendication 1, **caractérisée en ce que** ladite unité de relais fait partie d'une unité d'accès d'un réseau de communication de données.

4. Procédé destiné à relayer un trafic en mode multidiffusion dans un système de communication de données (1) et comprenant les étapes consistant à recevoir d'une station particulière (11) un rapport d'appartenance (61), moyennant quoi une appartenance à un groupe multidiffusé particulier est notifiée,
**caractérisé en ce que** ledit procédé comprend en outre les étapes consistant à :
- interroger (71, 72) une pluralité de routeurs de multidiffusion (41 à 44) dans une pluralité de domaines virtuels de diffusion générale (51, 52) afin de connaître ledit groupe multidiffusé particulier qui est pris en charge,
- élire un domaine virtuel de diffusion générale (51) parmi ladite pluralité de domaines virtuels de diffusion générale, dans lequel un routeur de multidiffusion (41) parmi ladite pluralité de routeurs de multidiffusion a notifié une prise en charge dudit groupe multidiffusé particulier,
- signaler ladite appartenance au dit un routeur de multidiffusion dans un dit domaine virtuel de diffusion générale,
- transmettre un contenu multidiffusé particulier (91), relatif au dit groupe multidiffusé particulier et provenant dudit un routeur de multidiffusion, dudit un domaine virtuel de diffusion générale à ladite station particulière.
